# EUROPÄISCHE PATENTANMELDUNG

(11) **EP 3 792 430 A1**
(43) Veröffentlichungstag der Anmeldung: **17.03.2021**
(21) Anmeldenummer: 20194114.3
(22) Anmeldetag: 02.09.2020
(51) Int. Cl.: E04H 12/16, F03D 13/20

(54) **TURM**

(30) Priorität: 09.09.2019 DE 102019124123
(71) Anmelder: Ventur GmbH, 57080 Siegen (DE)
(72) Erfinder: Bleuel, Frank, 57234 Wilnsdorf (DE); Stahl, Michael, 51580 Reichshof-Hespert (DE)
(74) Vertreter: Grosse, Wolf-Dietrich Rüdiger

(57) **Zusammenfassung**

Ein Turm (1), vorzugsweise für Windkrafträder, der zumindest teilweise aus auf einer Fundamentplatte (2) aufstehenden und übereinander angeordneten, über Spannlitzen vertikal vorgespannten Fertigbeton-Wandelementen besteht, soll so weitergebildet werden, dass große Turmhöhen erreicht werden, ohne dass im unteren Turmbereich aufwendig, überdimensioniert sehr viele Fertigbeton-Wandelemente eingesetzt werden müssen, wobei die aus Transportgründen maximale Breite der Fertigbeton-Wandelemente optimal ausgenutzt werden soll, so dass ein kostengünstiges aus wenigen Elementen bestehender Fertigbeton-Bauwerk gewährleistet ist. Dazu wird vorgeschlagen, dass die Form des Polygons des Fertigbeton-Bauwerks von der Fundamentplatte (2) hin zu seiner Spitze mindestens einmal wechselt, wobei die Anzahl der Ecken des Polygons mit steigender Höhe abnimmt, und dass im Bereich des Wechsels der Polygonform ein Adapterring (4) vorgesehen ist, dessen unterer Bereich die Polygonform mit der höheren Anzahl an Ecken und dessen oberer Teil die Polygonform mit der niedrigen Anzahl an Ecken aufweist.

## Beschreibung

Die Erfindung betrifft einen Turm, vorzugsweise für Windkrafträder, der zumindest teilweise aus auf einer Fundamentplatte aufstehenden und übereinander angeordneten, über Spannlitze in vertikaler Richtung vorgespannten Fertigbeton-Wandelementen besteht, wobei der sich nach oben stetig verjüngende Turm aus ebenen Fertigbeton-Wandelementen erstellt ist, welche die Form eines gleichschenkeligen Trapezes aufweisen, und die Fertigbeton-Wandelemente zu einem, in seinem Grundriss einen Polygon-Querschnitt aufweisenden Bauwerk zusammengesetzt sind.

Ein derartiger Turm gehört beispielsweise durch die EP 2 239 398 B1 zum Stand der Technik. Die Fertigbeton-Wandelemente für derartige Türme werden in einem Fertigbetonwerk hergestellt und anschließend, in der Regel über die Straße, zu dem Ort, an dem der Turm aufgebaut werden soll, verbracht. Dabei können derartige Fertigbeton-Wandelemente, damit sie z. B. unter Brücken transportiert werden können, Längen, die später deren Höhe entsprechen, von 15 bis max. 20 m aufweisen. Die Breiten der Fertigbeton-Wandelemente sollten 3 bis max. 4 m nicht überschreiten, da größere Wandelemente nur noch mit Sondergenehmigungen auf den Straßen befördert werden können, wobei dann sehr kostenintensiv ggf. längere Fahrtrouten eingeplant werden müssen und/oder Ampeln und Verkehrsbeschilderungen umzusetzen sind.

In letzter Zeit werden immer höhere Windkrafttürme verlangt. Je höher ein derartiger Windkraftturm gebaut wird, desto größer werden auch deren auf der Fundamentplatte aufstehenden Breiten der Seitenwände. Die herkömmlichen Türme mit z. B. acht Ecken können dadurch, dass die Breiten der Fertigbeton-Wandelemente durch den Transport begrenzt sind, nur eine bestimmte Höhe erreichen. Um noch höhere Türme herstellen zu können, könnte man von dem Polygongrundriss achteckig weggehen auf einen zwölfeckigen Turm bauen. Dieser könnte erheblich höher gebaut werden. Problematisch ist dann jedoch die Spitze des Fertigbeton-Bauwerks, da auch hier zwölf Seitenwände vorgesehen werden müssen, auf welche dann ggf. der Adapter für eine Metallturmspitze aufgesetzt werden müsste. Für diese zwölf Wandelemente ist im Bereich des Anschlusses der Metallturmspitze, auch wenn sie nur sehr geringe Breiten aufweisen, regelmäßig nicht ausreichend Platz.

Aus diesem Grunde schlägt die JP 2007/120080 bereits einen Turm vor, der aus rechteckigen Bauteilen aus Metall oder auch aus Beton gefertigt wird, zwischen welche im Prinzip Dreiecke eingesetzt werden, deren Spitze jedoch nicht bis in die Turmspitze reicht. Dadurch hat der Turm im Bereich der Fundamentplatte die doppelte Anzahl von aufstehenden Wandelementen als an dessen Spitze. Damit wäre an der Spitze ein achteckiger Turm verwirklicht. Die Fundamentplatte müsste der Turm dann jedoch die doppelte Anzahl, sprich sechzehn Ecken aufweisen, wodurch im unteren Bereich des Turms ein sehr großer, kostenintensiver Aufwand betrieben werden muss.

Aus der EP 3 162 983 B1 ist ein Windturbinenturm bekannt, der nicht aus Betonplatten, sondern aus im Wesentlichen gleichen, rechteckigen Metallplatten zu einem sich nicht verjüngenden Turm zusammengeschweißt ist, wobei die rechteckigen aufstehenden Metallplatten einen polygonalen Querschnitt aufweisen. Um einen kostengünstigeren Aufbau des Turms zu gewährleisten werden Übergangsabschnitte vorgeschlagen, bei denen von einem polygon- Querschnitt auf einen polygon- Querschnitt mit einer niedrigeren Anzahl von Ecken übergegangen wird. Die oben geschilderten Platzprobleme im oberen Bereich des Turmes bei sich stetig verjüngenden Türmen aus ebenen, die Form eines gleichschenkligen Trapezes aufweisenden Wandelementen treten hier nicht auf.

Der Erfindung liegt die Aufgabe zugrunde, einen sich stetig verjüngenden Turm derart zu gestalten, dass große Turmhöhen erreicht werden, wobei im oberen Bereich des Turms optimaler Platz für den Anschlusses der Metallturmspitze erreicht wird, ohne dass im unteren Turmbereich aufwendig, überdimensioniert sehr viele Fertigbeton-Wandelemente eingesetzt werden müssen, wobei die aus Transportgründen maximale Breite der Fertigbeton-Wandelemente optimal ausgenutzt werden kann, so dass ein kostengünstiges aus wenigen Elementen bestehender Fertigbeton-Bauwerk gewährleistet ist.

Zur Lösung der Aufgabe wird vorgeschlagen, dass die Form des Polygon-Querschnitts in verschiedenen horizontalen Ebenen des Fertigbeton-Bauwerks von der Fundamentplatte bis zu seiner Spitze mindestens einmal wechselt, wobei die Anzahl der Ecken des Polygons mit steigender Höhe des Fertigbeton-Bauwerks abnimmt, und dass im Bereich des Wechsels der Form des Polygon-Querschnitts ein Adapterring vorgesehen ist, dessen unterer Bereich die Polygon-Querschnittsform mit der höheren Anzahl an Ecken und dessen oberer Bereich die Polygon-Querschnittsform mit der niedrigen Anzahl an Ecken aufweist.

Dadurch kann z. B. der Grundriss des Fertigbeton-Bauwerks auf der Fundamentplatte einen zehn- oder zwölfeckigen Polygon-Querschnitt und oberhalb des Adapterrings nur noch ein achteckige Polygon-Querschnitt aufweisen. Damit können für den Transport der Fertigbeton-Wandelemente maximale Breiten im Bereich der auf der Fundamentplatte aufstehenden Fertigbeton-Wandelemente ausgenutzt, und mit nur wenig mehr Elementen eine erheblich größere Höhe des Turmbauwerks gewährleistet werden.

Selbstverständlich kann der Polygon-Querschnitt über die Höhe des Fertigbeton-Bauwerkes auch mehr als einmal wechseln.

Es hat sich bewährt, dass die Neigung der Wände des Fertigbeton-Bauwerks zur Senkrechten im Bereich des Polygon-Querschnitts mit einer höheren Anzahl an Ecken sich von der Neigung der Wände des Fertigbeton-Bauwerks zur Senkrechten im Bereich des Polygon-Querschnitts mit niedriger Anzahl an Ecken unterscheidet.

Damit kann von einem im unteren Bereich wuchtig wirkenden Aufbau über eine z.B. 3° Neigung zu einem filigraner wirkenden Aufbau im oberen Bereich übergegangen werden, der dann lediglich noch 2° Neigung zur senkrechten aufweist.

Von Vorteil ist, dass das Fertigbeton-Bauwerk sowohl im Bereich des Polygon-Querschnitts mit höherer Anzahl an Ecken als auch mit der niedrigen Anzahl an Ecken jeweils eine grade Anzahl an Ecken aufweist, und dass sich in jeder Schnittebene des unteren bzw. oberen Fertigbeton-Bauwerks um gleichseitige Polygone handelt.

Dadurch, dass die Seitenwände sowohl im oberen als auch im unteren Bereich des Fertigbeton-Bauwerks gleichlang sind, lassen sich die über die Spannlitzen eingeleiteten Zugkräfte optimal verteilen.

Vorzugsweise werden sowohl die Wände des Fertigbeton-Bauwerks im Bereich des Polygon-Querschnitts mit größerer Anzahl an Ecken als auch die Wände mit niedrigerer Anzahl an Ecken in Kletterbauweise gefertigt.

Unter Kletterbauweise ist zu verstehen, dass von den direkt auf der Fundamentplatte bzw. direkt auf dem Adapterring aufstehenden Fertigbeton-Elementen mindestens ein Fertigbeton-Wandelement eine geringere Höhe beispielsweise die halbe Höhe aufweist gegenüber den übrigen, direkt auf der Fundamentplatte bzw. dem Adapterring aufstehenden Fertigbeton-Wandelementen und dass zwischen den direkt auf der Fundamentplatte bzw. dem Adapterring aufstehenden Fertigbeton-Wandelementen und dem jeweiligen obersten Abschluss der Fertigbeton-Wandelementen alle Fertigbeton-Wandelemente die gleiche Höhe aufweisen, wobei in den oberen Lücken zwischen den Fertigbeton-Wandelementen Fertigbeton-wandelemente geringerer Höhe vorzugsweise wieder halber Höhe eingesetzt sind. Dadurch wird erreicht, dass sich die Fertigbeton-Wandelemente, die in die Lücken zwischen den anderen Fertigbeton-Wandelementen gesetzt werden, optimal gegeneinander abstützen.

Nachahmenswert ist, dass die Spannlitzen von der Spitze des Fertigbeton-Bauwerks bis zur Fundamentplatte reichen und im Bereich der Fundamentplatte und / oder im Bereich der Fertigbeton-Bauwerkspitze gespannt sind. Dadurch kann mit jeweils einem Spannvorgang das ganze Bauwerk vorgespannt werden. Alternativ dazu können die Spannlitzen im Bereich des Adapterrings unterbrochen sein und im Bereich der Fundamentplatte und / oder des Adapterrings sowie im Bereich der Fertigbeton-Bauwerkspitze und / der im Bereich des Adapterrings gespannt sein.

Werden die Spannlitzen z. B. jeweils im Adapterring gespannt, ist im Grunde nur ein Ort zum spannen für die nach oben bzw. unten gehenden Spannlitzen vonnöten, wodurch sich trotz geteilter Spannlitzen der Zeitaufwand für das Spannen des Turms nicht wesentlich erhöht.

Bedeutsam ist, dass die Spannlitzen in Hüllrohren geführt sind, welche innerhalb der Fertigbeton-Wandelemente angeordnet und / oder an der Innenseite des Fertigbeton-Bauwerks gehalten sind. In den Hüllrohren kann, wie bereits bekannt, Fett vorgesehen sein, um die Spannlitzen vor Korrosion zu schützen. Werden die Spannlitzen sowohl in den Fertigbeton-Wandelementen als auch an der Innenseite des Fertigbeton-Bauwerks angeordnet, so lassen sich die Zugkräfte optimal einleiten. Selbstverständlich können die Spannlitzen aber auch von außen nach innen wiederholt in den Fertigbeton-Wandelementen angeordnet werden.

Die Erfindung wird anhand einer Zeichnung näher erläutert. Dabei zeigt:
- Figur 1: einen erfindungsgemäßen hohen Turm,
- Figur 2: einen Schnitt durch den Turm im Bereich der Fundamentplatte,
- Figur 3: den erfindungsgemäßen Adapterring, und
- Figur 4: einen Schnitt durch den Turm oberhalb des Adapterrings.

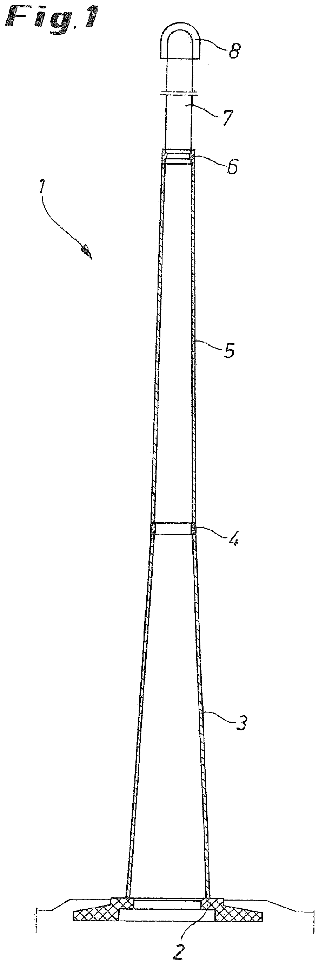

Figur 1 zeigt einen hohen Turm 1, der auf einer Fundamentplatte 2 aufsteht. Der Turm 1 besteht aus einem unteren Turmabschnitt 3, einem Adapterring 4, einem oberen Turmabschnitt 5, einem Adapterring 6 sowie einen Metallturm 7, auf dem die Gondel 8 einer nicht weiter dargestellten Windkraftanlage angeordnet ist. Deutlich zu erkennen ist, dass der untere Turmabschnitt 3 eine größere Neigung zur Senkrechten aufweist als der obere Turmabschnitt 5.

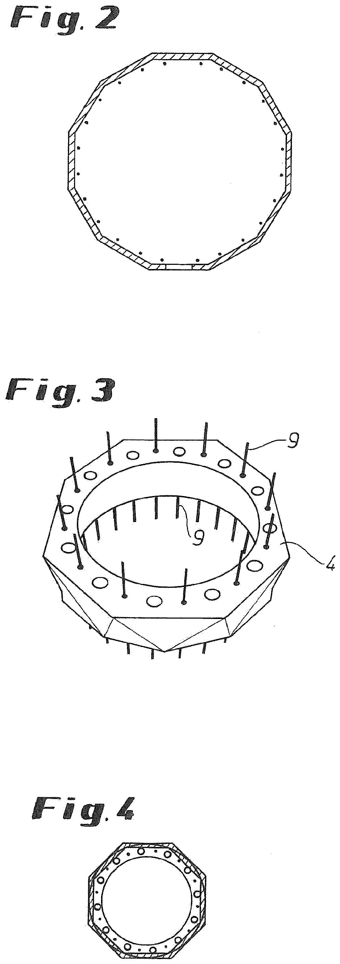

Figur 2 zeigt einen Querschnitt durch den unteren Turmabschnitt 3. Hier ist zu erkennen, dass der untere Turmabschnitt die Form eines gleichschenkligen Polygons mit zwölf Ecken aufweist. Werden hier im Fundamentbereich die maximalen Breiten der zu transportierenden Fertigbeton-Wandelemente ausgeschöpft, wird ein erheblich umfangreicherer Turmabschnitt, der ein größere Höhe des Turms gewährleistet, erreicht, als wenn hier lediglich acht Segmente aufstünden.

Figur 3 zeigt einen erfindungsgemäßen Adapterring 4, welcher im unteren Bereich zwölfeckig und mit gleichlangen Seiten ausgeformt ist, während im oberen Bereich des aus Beton oder Metall bestehenden Adapterrings nur noch ein achteckiges Polygon zu erkennen ist. Der Adapterring 4 weist sowohl in Richtung des unteren Turmabschnitts 3 als auch in Richtung des oberen Turmabschnitts 4 gerichtete Spannlitzen 9 auf, durch die ein sicherer Sitz des Adapterrings 4 zwischen oberen und unteren Turmabschnitt 3, 5 gewährleistet ist.

Figur 4 zeigt einen Querschnitt durch den oberen Turmabschnitt 5. Hier ist zu erkennen, dass wiederum ein gleichschenkliges Polygon vorliegt, welches jedoch nur acht Ecken aufweist.

Auf dem oberen Turmabschnitt 5 ist in Figur 1 ein bereits bekannter Adapterring 6 zu erkennen, der einen sicheren Übergang vom Turm aus Fertigbeton-Wandelementen hin zu dem Metallturm an der Spitze des Fertigbeton-Bauwerks gewährleistet.

### Bezugszeichenliste

- 1: Turm
- 2: Fundamentplatte
- 3: unterer Turmabschnitt
- 4: Adapterring
- 5: oberer Turmabschnitt
- 6: Adapterring
- 7: Metallturm
- 8: Gondel
- 9: Spannlitzen

## Patentansprüche

1. Turm (1), vorzugsweise für Windkrafträder, der zumindest teilweise aus auf einer Fundamentplatte (2) aufstehenden und übereinander angeordneten, über Spannlitzen vertikal vorgespannten Fertigbeton-Wandelementen besteht, wobei der sich nach oben stetig verjüngende Turm (1) aus ebenen Fertigbeton-Wandelementen erstellt ist, welche die Form eines gleichschenkeligen Trapezes aufweisen, und die Fertigbeton-Wandelemente zu einem, in seinem Grundriss einen Polygon-Querschnitt aufweisenden Bauwerk zusammengesetzt sind,
**dadurch gekennzeichnet, dass**
die Form des Polygon-Querschnitts in verschiedenen horizontalen Ebenen des Fertigbeton-Bauwerks von der Fundamentplatte (2) hin zu seiner Spitze mindestens einmal wechselt,
wobei die Anzahl der Ecken des Polygons mit steigender Höhe des Fertigbeton-Bauwerks abnimmt,
und dass im Bereich des Wechsels der Form des Polygon-Querschnitts ein Adapterring (4) vorgesehen ist, dessen unterer Bereich die Polygon-Querschnittsform mit der höheren Anzahl an Ecken und dessen oberer Teil die Polygon-Querschnittsform mit der niedrigen Anzahl an Ecken aufweist.

2. Turm (1) nach Anspruch 1,
**dadurch gekennzeichnet, dass**
die Neigung der Wände des Fertigbeton-Bauwerks zur Senkrechten im Bereich des Polygon-Querschnitts mit höherer Anzahl an Ecken sich von der Neigung der Wände des Fertigbeton-Bauwerks zur Senkrechten im Bereich des Polygon-Querschnitts mit niedriger Anzahl an Ecken unterscheidet.

3. Turm (1) nach Anspruch 1 oder 2,
**dadurch gekennzeichnet, dass**
das Fertigbeton-Bauwerk sowohl im Bereich des Polygon-Querschnitts mit höherer Anzahl an Ecken als auch im Bereich mit der niedrigen Anzahl an Ecken jeweils eine grade Anzahl an Ecken aufweist und dass sich in jeder Schnittebene des unteren bzw. oberen Fertigbeton-Turmabschnittes (3, 5) um gleichschenklige Polygone handelt.

4. Turm (1) nach einem der Ansprüche 1 bis 3,
**dadurch gekennzeichnet, dass**
sowohl die Wände des Fertigbeton-Bauwerks im Bereich des Polygon-Querschnitts mit größerer Anzahl an Ecken als auch die Wände mit niedriger Anzahl an Ecken in Kletterbauweise gefertigt sind.

5. Turm (1) nach mindestens einem der Ansprüche 1 bis 4,
**dadurch gekennzeichnet, dass**
die Spannlitzen von der Spitze des Fertigbeton-Bauwerks bis zur Fundamentplatte (2) reichen und im Bereich der Fundamentplatte (2) und / oder im Bereich der Fertigbeton-Bauwerkspitze gespannt sind.

6. Turm (1) nach mindestens einem der Ansprüche 1 bis 4,
**dadurch gekennzeichnet, dass**
die Spannlitzen im Bereich des Adapterrings (4) unterbrochen sind und im Bereich der Fundamentplatte (2) und / oder des Adapterrings (4) sowie im Bereich der Fertigbeton-Bauwerkspitze und / oder im Bereich des Adapterrings (4) gespannt sind.

7. Turm (1) nach einem der Ansprüche 1 bis 6,
**dadurch gekennzeichnet, dass**
die Spannlitzen in Hüllrohren geführt sind, welche innerhalb der Fertigbeton-Wandelemente angeordnet und / oder an der Innenseite des Fertigbeton-Bauwerks gehalten sind.
